# EUROPÄISCHE PATENTSCHRIFT

(11) **EP 2 794 998 B1**
(45) Veröffentlichungstag und Bekanntmachung des Hinweises auf die Patenterteilung: **31.05.2017**
(21) Anmeldenummer: 12821131.5
(22) Anmeldetag: 13.12.2012
(51) Int. Cl.: E02B 9/06, F03B 3/12, F03B 13/08, F03B 3/02

(54) **KLEINWASSERKRAFTWERK**
SMALL HYDROELECTRIC POWER STATION
PETITE CENTRALE HYDRAULIQUE

(30) Priorität: 23.12.2011 CH 20532011; 10.04.2012 CH 4912012
(43) Veröffentlichungstag der Anmeldung: 29.10.2014
(73) Patentinhaber: Ingenieurbüro Arnet GmbH, 5442 Fislisbach (CH)
(72) Erfinder: ARNET, Reto, CH-5442 Fislisbach (CH)
(74) Vertreter: Tompkin, Christine
(86) Internationale Anmeldenummer: PCT/IB2012/057269
(87) Internationale Veröffentlichungsnummer: WO 2013/093727

(56) Entgegenhaltungen:
- WO-A1-82/00860
- WO-A2-2008/141349

## Beschreibung

### Technisches Gebiet

Die Erfindung betrifft ein Kleinkraftwerk zur Erzeugung elektrischer Energie aus Wasserkraft von Flüssen geringer Fallhöhen. Die Erfindung betrifft insbesondere ein solches Kleinkraftwerk mit einer Zentripetalturbine.

### Stand der Technik

Kleinwasserkraftwerke sind seit vielen Jahrzehnten bekannt. Sie werden mit Turbinen verschiedener Typen betrieben, wie zum Beispiel Francis-Turbinen, Schachtturbinen sowie Ossberger-Turbinen, auch Durchflussturbinen genannt. Die Turbinentypen unterscheiden sich in ihrem Wirkprinzip, der Ausgestaltung ihrer Turbinenschaufeln sowie deren Ausrichtung im Wasserstrom.

Francis-Turbinen umfassen ein schneckenförmiges Einlaufrohr, welches das Wasser in Drall versetzt und einem Leitrad zuführt. Von dort durchströmt das Wasser ein Laufrad mit zum Leitrad gegenläufig gekrümmten Schaufeln, wobei das Laufrad einen Generator antreibt. Bei Veränderungen des Wasserstands kann die Drehzahl des Generators und Leistung des Kraftwerks durch Einstellung der Winkelposition der Leitradschaufeln konstant gehalten werden.

Ossberger-Turbinen, wie zum Beispiel in DE13327456 und EP0133306 offenbart, sind walzenförmig ausgeführte Durchströmturbinen mit horizontal ausgerichteter Welle. Sie enthalten in der Regel einen Leitapparat der einen freiströmenden Wasserstrahl generiert und auf ein Laufrad richtet. Der Wasserstrahl durchströmt das Laufrad zunächst von aussen nach innen und nach Durchquerung des Radinnern wiederum von innen nach aussen. Aufgrund ihrer Konstruktion sind Ossberger-Turbinen auf Veränderungen des Wasserstands und der Fliessgeschwindigkeit anpassungsfähig. Typischerweise verlässt das Wasser die Turbinenkammer über ein Saugrohr oder einen Saugstutzen.

Schachtturbinen, wie zum Beispiel in DE102009037196 beschrieben, sind zusammen mit dem Generator gänzlich unter Wasser angeordnet. Sie werden bei Flüssen mit mittlerer Fallhöhe eingesetzt, wobei das Wasser gelangt über einen Stauraum in einen vertikalen Schacht gelangt und strömt von oben zu einer Turbine. Um den Eintritt des Wassers in die

Turbine zu gewährleisten, besitzt der Schacht einen Querschnitt, der viel grösser ist als der der Turbine und/oder eines Leitapparates. Das Wasser verlässt die Turbine über ein gekrümmtes Saugrohr. Die Wirkung dieser Turbine beruht auf dem statischen Wasserdruck und einem Unterdruck im gekrümmten Saugrohr.

Eine weitere Turbine mit vertikal angeordneter Welle ist in WO2011/051421 offenbart, die auf dem Wirkprinzip eines Gravitationswirbels beruht. Dort weist eine walzen- oder zylinderförmige Turbine Laufschaufeln auf, die an ihrem oberen Ende an einer Deckscheibe befestigt sind und sich durchgängig bis zu einem tiefliegenden Rotationsboden und bis unter den Niedrig- oder Unterwasserspiegel erstrecken. Die grosse Bauhöhe der Turbinenschaufeln erlaubt den stufenlosen Betrieb des Kraftwerks bei verschiedenen Fallhöhen und Durchflussmengen. Die Turbine ist zudem derart positioniert, dass ihre Deckscheibe jeweils über dem Oberwasserspiegel zu liegen kommt, sodass stets ausreichend Luft in das Zentrum des Gravitationswirbels gelangt und diesen auch aufrecht erhält. An der Deckscheibe der Turbine angebrachte Öffnungen bezwecken ebenfalls Luftzufuhr. WO82/00860 offenbart ein Kraftwerk, insbesondere für kleine Wasserläufe, das auf der Kombination der Prinzipien der Turbinen vom Reaktionstyp mit den Prinzipien der Turbinen vom Impulstyp basiert. Bei diesem Kraftwerk wird insbesondere eine Strömung im überkritischen Bereich in die Turbine eingeleitet.

Im Zuge der jüngsten Bestrebungen, neue und fischfreundliche Energiequellen zu erfassen, wird heute zunehmend auch den Kleinwasserkraftwerken, geeignet für Flusswasser mit geringer Fallhöhe im Bereich von 1-3 Metern, mehr Beachtung geschenkt. Dies geht zum Beispiel aus dem Schlussbericht "Evaluation von Ultra-Niederdruckdruckkonzepten für Schweizer Flüsse" des Eidgenössischen Departementes für Umwelt, Verkehr, Energie und Kommunikation vom 13. Juli 2011 hervor.

Dort werden unter anderem Wasserwirbelkraftwerke, Wasserdruckmaschinen mittelschächtige Wasserräder, Lamellenturbinen sowie Wasserkraftschnecken zur Erzeugung von elektrischem Strom aus Flusswasser mit geringer Fallhöhe im Bereich von 2m vorgestellt.

### Beschreibung der Erfindung

Aufgabe der Erfindung ist ein Niederdruck-Kleinwasserkraftwerk zu realisieren, das mit Flusswasser geringer Fallhöhe betrieben werden kann, mit geringem Kosten- und Bauaufwand realisierbar und ökologisch, insbesondere bezüglich der Fischwelt, vertretbar ist.
Auf diese Aufgabe wird ein Niederdruck-Wasserkraftwerk offenbart, mit einem Einlaufkanal mit Oberwasserspiegel, einer Turbinenkammer, einer Zentripetalturbine mit vertikaler Turbinenwelle, einem Saugstutzen und einem Auslaufkanal mit Unterwasserspiegel. Die Höhe zwischen dem Oberwasserspiegel und dem Unterwasserspiegel wird als Fallhöhe des Wassers definiert.
Gemäss der Erfindung ist der gesamte Einlaufkanal als Rinne ausgebildet und weist einen Beschleunigungskanal auf, der sich in seiner Breite in Strömungsrichtung zunehmend verjüngt, wobei der Wasserspiegel sich im Beschleunigungskanal senkt. Der Beschleunigungskanal besitzt an der engsten Stelle eine Auslassöffnung, die in die Turbinenkammer mündet. Die Zentripetalturbine weist ein Turbinenlaufrad, eine Turbinendeckscheibe und eine Turbinenfussscheibe auf, wobei die Turbinenfussscheibe insbesondere auf einer Höhe über dem Unterwasserspiegel angeordnet ist, diese Höhe, in Abhängigkeit vom Volumenstrom, in einem Bereich von 25 bis 50% der gesamten Fallhöhe liegt.

Die erfindungsgemässe Ausgestaltung des Einlaufkanals als Rinne erlaubt ein offenes Gerinn, dessen Strömung im sich verjüngenden Kanal beschleunigt wird. Die Verengung des Kanals und Beschleunigung des Wassers bewirken ein Abfallen des Wasserspiegels im Beschleunigungskanal sowie in der Turbinenkammer. Diese Ausgestaltung ermöglicht einen frei fliessenden Strom, dessen Froudezahl bei der Mündung vom Beschleunigungskanal in die Turbinenkammer um 1 beträgt. Der Strom ist dabei in einem maximal strömenden Zustand ohne einen schiessenden Zustand zu erreichen. Der Wasserstrom besitzt dadurch eine maximale Strömungsgeschwindigkeit bei maximal möglichem Volumenstrom. Dieser Zustand ist nur bei einem offenen Gerinn unter Atmosphärendruck möglich. Die Merkmale des erfindungsgemässen Kraftwerks ermöglichen eine maximale Nutzung dieses Effekts des offenen Gerinns. Insbesondere wird infolge des hohen Volumenstroms durch die Turbine ein für den Niederdruckbereich hoher Turbinenwirkungsgrad erzielt.
Ist insbesondere die Turbine, genauer die Turbinenfussscheibe, unter Volllastbetrieb auf einer Höhe von etwa 30% der Fallhöhe des Wassers über dem Unterwasserspiegel oder etwa 70% der Fallhöhe unter dem Oberwasserspiegel positioniert, liegt die Froudezahl der Strömung nahe dem kritischen Wert von 1.

Zudem können dank des hohen Volumenstroms die baulichen Abmessungen der Turbine klein gehalten werden, was die Baukosten insbesondere für ein Kleinkraftwerk stark begünstigt.
Indem die Froudezahl des Wasserstroms einen Wert um 1 beträgt, sind die Vorausssetzungen eines guten Funktionierens des Kraftwerks gegeben. Ist nämlich der Strom durch die Turbine kontinuierlich und bleibt ein steter Sog aufrecht erhalten, ergibt sich kein Rückstau in der Turbine. Jeglicher Rückstau hingegen würde eine Entschleunigung des Wasserstroms und Reduzierung des Volumenstroms nach sich ziehen.

Aufgrund der erfindungsgemässen Auslegung des Einlaufkanals und der Turbine, sind bei diesem Kraftwerk aufwändige Durchflussregelungssysteme nicht notwendig, wie sie etwa bei Kaplan- oder Francis-Turbinen üblich sind.

Die Geschwindigkeit des Stroms ist in etwa gleich der Laufgeschwindigkeit der Turbine. Zudem kann das Kraftwerk bei einer relativ tiefen Turbinendrehzahl von beispielsweise 30-50 Umdrehungen pro Minute betrieben werden. Dadurch wird eine ökologische Verträglichkeit des Kraftwerks erreicht, indem Fische, die in die Turbine gelangen, diese unbeschadet passieren können.

In einer Ausführung der Erfindung weist die Turbinenkammer einen runden horizontalen Querschnitt auf und umschliesst die Zentripetalturbine, wobei ein Spalt zwischen der inneren Turbinenkammerwand und den radial äusseren Enden der Turbinenschaufeln für den Einlauf des Wassers in die Turbine besteht. Der Spalt ist kleiner oder gleich der Hälfte des Turbinendurchmessers an den radial äusseren Enden der Turbinenschaufeln.

Die Dimensionierung der Auslassöffnung des Beschleunigungskanals in die Turbinenkammer im Verhältnis zum Spalt zwischen der Turbinenkammerwand und der Turbine bewirken zusammen mit der runden Form der Kammer, dass die Turbinenkammer die Turbine im Vergleich zu Turbinen des Standes der Technik über den gesamten Umfang relativ eng umschliesst. Dadurch wird das Wasser an der Turbinenkammer umgelenkt und durch die Zentrifugalkraft an ihrer Innenwand gedrückt, sodass es an ihr aufsteigt. Das Wasser in der Mitte der Turbinenkammer hingegen überflutet die Turbine knapp über ihrer Deckscheibe. Dies bewirkt, dass keine Luft zu den Turbinenschaufeln gelangt und der Turbinenwirkungsgrad erhöht wird. Anderseits, ist der Spalt zwischen Turbine und Turbinenkammerwand genügend gross, sodass ausreichend Wasser auf die Turbinenschaufeln gelangt.

In einer weiteren Ausführung der Erfindung beträgt die horizontale Erstreckung der Auslassöffnung des Beschleunigungskanals ein Viertel bis die Hälfte des Durchmessers der Turbine an den radial äusseren Enden der Turbinenschaufeln. Dies trägt zusätzlich zur Optimierung der Strömungsgeschwindigkeit und einen optimalen Volumenstrom bei.

In einer weiteren Ausführung der Erfindung ist der Saugstutzen am Boden der Turbinenkammer angeordnet und erstreckt sich in seiner vertikalen Länge bis unter den Unterwasserspiegel im Auslaufkanal des Kraftwerks. Damit wird eine kontinuierliche Saugwirkung und wiederum ein erhöhter Turbinenwirkungsgrad gewährleistet.

In einer weiteren Ausführung der Erfindung ist der Saugstutzen konisch ausgebildet, was die Saugwirkung begünstigt. In einer besonderen Ausführung ist der Durchmesser des Saugstutzens an der Stelle auf Höhe der Unterseite des Turbinenkammerbodens gleich oder zweidrittel seiner vertikalen Länge, gemessen von der Unterseite des Turbinenkammerbodens. Für das Kraftwerk gemäss der Erfindung wird mit diesem Verhältnis eine optimale Saugwirkung erzielt.

In einer Ausführung der Erfindung weist die Turbine eine Deckscheibe auf, die im Betrieb unter dem Wasserspiegel in der Turbinenkammer liegt. Dadurch dringt vermindert Luft in den Wasserstrom für die Turbine ein, was den Wirkungsgrad der Turbine aufrecht erhält. Um ein Eindringen von Luft in den Wasserstrom weiter zu verhindern, erstreckt sich die Deckscheibe der Turbine radial über das maximale radiale Ausmass der Turbine hinaus ohne die Turbinenkammerwand berühren. Dieser radiale Überhang gewährt eine zusätzliche Abdeckung gegenüber dem Luftraum über der Turbine.

Das horizontal liegende Laufrad der Turbine weist Turbinenschaufeln mit einer einfachen Krümmung im horizontalen Querschnitt auf, wobei sie einen geraden vertikalen Querschnitt aufweisen. Eine solche Ausführung ermöglicht eine besonders kostengünstige Realisierung.

In einer besonderen Ausführung der Erfindung weist die Turbine ein Durchmesser-zu-Höhen-Verhältnis in einem Bereich von 6:1 bis zu 12:1, beispielsweise 10:1 auf. Dabei wird der Durchmesser an den radial äusseren Schaufelenden gemessen. Die Turbine ist damit breit und flach ausgebildet, was einerseits eine grosse Wasser-Eintrittsfläche gewährt und dadurch den kontinuierlichen Fluss sowie einen höheren Wirkungsgrad ermöglicht. Anderseits kann eine flache Turbine mit geringer Höhe in der Anwendung bei Flüssen mit geringer Fallhöhe besser eingesetzt werden.

In einer Ausführung weist die Turbine Stahlstreben auf, die mit dem Flansch und der Deckscheibe der Turbine verbunden sind. Die Stahlstreben wirken den auf die Turbine und nach unten gerichteten Sogkräften entgegen und ermöglichen eine breite, flache und somit leichte Konstruktion des Turbinenlaufrads.

In einer Ausführung weist das Kraftwerk in der Höhe einstellbare Stahlträger auf zur optimalen Höhenpositionierung der Turbine bezüglich des Turbinenkammerbodens.

Da der Turbinenkammerboden deutlich über dem Unterwasserspiegel liegt, ist in einer weiteren Ausführung ein Grundablasskanal angeordnet, der unter der Turbinenkammer hinweg führt, sowie eine Schütze, die ein Öffnen und Schliessen des Grundablasskanals erlaubt. Ein solcher Kanal ermöglicht eine Reinigung der Einlaufrinne, der Turbinenkammer sowie eines Rechens, der in der Einlaufrinne angeordnet ist. Der Rechen ist dabei leicht überhängend und stromaufwärts gerichtet angeordnet.

In einer weiteren Ausführung des Kraftwerks sind auf dem Turbinenkammerboden radial auswärts der Turbine verschiebbare L-förmige Schienen-Elemente angeordnet, zur Einstellung und Minimierung eines Spaltes zwischen Schienen-Element und dem radial äusseren Rand an der Turbinenunterscheibe. Die Schienen sind mit Langlöchern versehen, die sich in der radialen Richtung der Turbine erstrecken, und sind mittels Bolzen durch die Langlöcher am Turbinenkammerboden befestigt. Die Schienen sind über den Bereich der Langlöcher radial verschiebbar, wodurch der Spalt zwischen Turbinenunterscheibe und Schienen-Element sich ändern lässt. Dies erlaubt eine manuelle Einstellung des Spaltes und somit eine Minimierung der Leckströmung.

Zwecks einer weiteren Verbesserung der Wasserumlenkung eingangs der Turbinenkammer sind ein oder mehrere stationäre, gerundete Leitbleche angeordnet. Bei geringem Volumenstrom kann sich auch die Wahrscheinlichkeit von Luftaufnahme erhöhen. Die Leitbleche verhindern damit zusätzlich die Bildung von Luftblasen im Wasserstrom und eine Senkung des Turbinenwirkungsgrads.

Das Kraftwerk gemäss der Erfindung kann auch mit mehreren nach- oder nebeneinander angeordneten Turbinenkammern realisiert werden.
Eine Ausführungsform der Erfindung ist anhand der Figuren offenbart. Gleiche Bezugszeichen in den verschiedenen Figuren deuten jeweils auf gleiche Elemente hin. Erstmalige Erklärungen betreffen alle Figuren, wenn nicht ausdrücklich anders erwähnt.

### Kurze Beschreibung der Figuren

Es zeigen:
Fig. 1: eine Draufsicht des Kraftwerks,
Fig. 2: einen vertikalen Schnitt des Kraftwerks gemäss A-A,
Fig. 3: einen vertikalen Schnitt des Kraftwerks gemäss B-B und nähere Ansicht der Turbine mit Saugstutzen,
Fig. 4a: eine Seiten-Ansicht von verschiebbaren Schienen-Elementen zur Minimierung der Leckströmung,
Fig. 4b eine Draufsicht einer verschiebbaren Schiene,
Fig. 4c. eine Draufsicht der Anordnung der verschiebbaren Schienen-Elemente um die gesamte Turbine.

### Ausführungsbeispiele der Erfindung

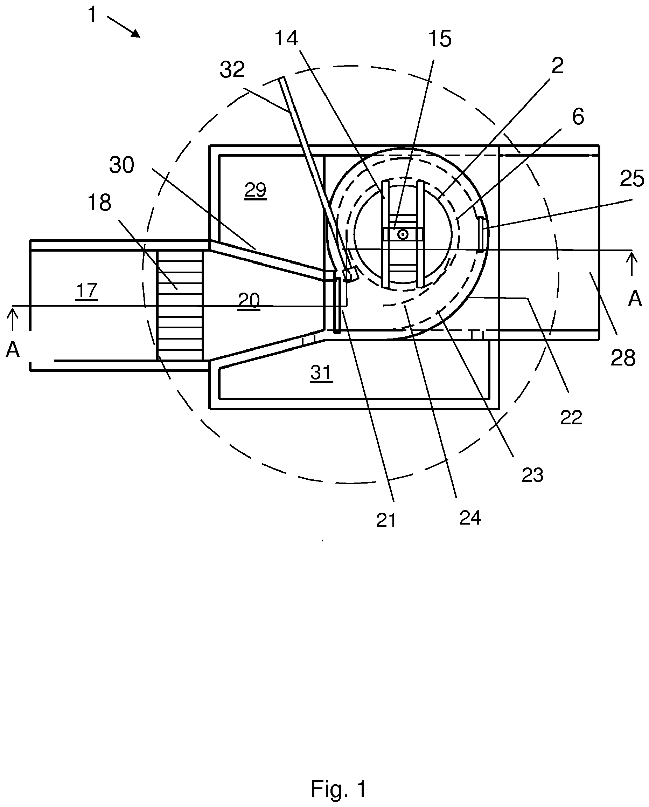

Figur 1 zeigt in einer ersten Ansicht ein Kraftwerk 1 gemäss der Erfindung mit einem Einlaufkanal 17 mit Oberwasserspiegel 16, einer runden Turbinenkammer 22 und einem Auslasskanal 28 mit Unterwasserspiegel 27. Die Turbinenkammer 22 weist eine gestrichelt eingezeichnete, innere Turbinenkammerwand 23 auf, die die Turbine umschliesst, sowie eine Öffnung 2 für den Ein- und Ausbau einer Zentripetalturbine. Die Turbine und ein von der Turbine angetriebener Generator 15 zur Erzeugung von elektrischer Energie werden von einer Tragkonstruktion 14 getragen.

Der Einlaufkanal 17, der als nach oben offene Rinne ausgebildet ist, weist zunächst parallel verlaufende Seitenwände sowie einen Rechen 18 zur Rückhaltung von grossen Geschiebeteilen auf, welche die Turbine blockieren könnten. Stromab des Rechens verlaufen die Seitenwände des Einlaufkanals in einem Winkel, der auch variabel sein kann, sodass sich die Breite der Rinne zunehmend verengt und sich ein Beschleunigungskanal 20 bildet. Der Beschleunigungskanal 20 mündet über eine Auslassöffnung bei seiner engsten Stelle in die Turbinenkammer 22.
Zwecks Unterhalt, Reinigung und Revision der Anlage, wie zum Beispiel Reinigung des Rechens 18, ist bei der engsten Stelle eine Schütze 21 angeordnet, mit der die Rinne 20 geschlossen werden kann, und eine weitere Schütze 25 dient dem Ablassen von Wasser aus der Kammer. Mit einem Drehkran 31 können der für den Unterhalt notwendige mit gestrichelter Linie bezeichnete Bereich abgedeckt und austauschbare Teile erreicht werden.

Der Einlaufkanal 17 weist zudem eine Überfallkante 30 auf, über die bei Hochwasser das Wasser in ein Überfallbecken 29 abfliessen kann.
Eine Fischschleuse 31 mit Öffnungen erlaubt das Passieren und Aufsteigen von Fischen.

Falls Fische den Rechen 18 nicht passieren können und nicht mehr stromauf zurück schwimmen können, können sich nach unten in den ruhigen Bereich des Einlaufkanals 17 bewegen. Von dort aus können sie entweder wieder zurück schwimmen oder bei einer gelegentlichen Öffnung der Schütze 21 das Kraftwerk passieren. Fische, die klein genug sind um den Rechen 18 zu passieren, gelangen in die Turbinenkammer und durch das Laufrad und den Saugstutzen in das Unterwasser. Während die tangentiale Wassergeschwindigkeit in der Turbinenkammer etwa der tangentialen Geschwindigkeit des Laufrads entspricht, ist die Fliessgeschwindigkeit durch das Laufrad der Turbine geringer. Auch erlaubt der Raum zwischen den Turbinenschaufeln (circa 10-30 cm) ein müheloses Passieren eines Fisches kleinerer Grösse. Fische können das Kraftwerk auch stromaufwärts über die Fischschleuse 31 passieren.

Die Zentripetalturbine treibt einen Generator 15 an. Da starke Hochwasser möglich sind und die Turbinenkammer überfluten können, wird vorzugsweise eine wasserdichte Ausführung eingesetzt oder der Generator wird höher versetzt.

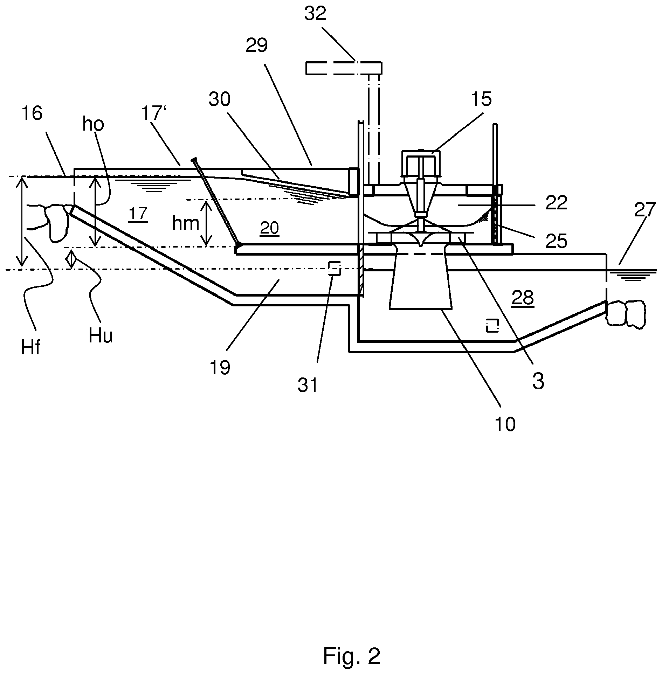

Figur 2 zeigt eine Ansicht gemäss Schnitt A-A aus Figur 1, wobei im Bereich der Einlaufrinne 17 auch deren Rand 17' sowie die Überlaufkante 30 und der hintere Rand des Überfallbeckens 29 gezeigt sind. Zu Beginn der Beschleunigungsrinne 20 besitzt das Wasser einen Oberwasserspiegel 16, wobei der Unterwasserspiegel 27 im Auslasskanal 28 um die Fallhöhe HF tiefer liegt, wobei die Turbine auf einer Höhe Hu über dem Unterwasserspiegel 27 liegt.

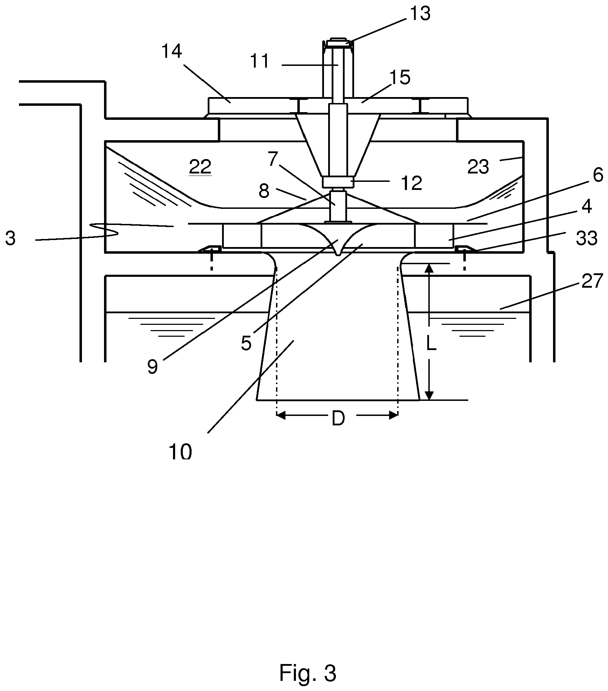

Figuren 2 und 3 zeigen die auf einer vertikalen Welle 7 ausgerichtete Zentripetalturbine mit einem breit und flach ausgebildeten Turbinenlaufrad 3 und Turbinenschaufeln 4. Das Laufrad 3 ist durch eine Turbinenfuss- oder unterscheibe 5 sowie einer Turbinendeckscheibe 6 abgeschlossen, wobei eine Öffnung im zentralen Bereich der Turbinenfussscheibe das Wasser in den Saugstutzen 10, dann in den Auslasskanal 28 abfliessen lässt. An der Unterseite des Turbinenrads 3 ist ein kegelförmiges Umlenkelement 9 angeordnet, das mitrotiert und das aus der Turbine abfliessende Wasser in den Saugstutzen lenkt. Der Saugstutzen 10 kann entweder mitrotierend am Turbinenlaufrad oder auch am Turbinenkammerboden befestigt werden.
Vorzugsweise erstreckt sich die Deckscheibe 6 radial über die Turbinenschaufelenden hinaus, sodass der Spalt zwischen Deckscheibe und Turbinenkammerwand sich verkleinert und ein Eindringen von Luftblasen in den Wasserstrom möglichst verhindert. Das breit und flach ausgebildete Turbinenlaufrad 3 ist mit mindestens 12 über den Umfang des Rads angeordneten Laufschaufeln ausgerüstet.
Das Turbinenlaufrad mit Deckscheibe 6, mit Stahlstreben 8 und einem Flansch ist an der Welle 11 befestigt, wobei die Stahlstreben 8 Zug- und Druckkräfte aufnehmen.
Die Turbinenwelle 11 ist vorzugsweise zweifach gelagert, mittels des Lagers 12 sowie einem weiteren Lager 13, welches die vertikalen Kräfte der Turbinenwelle 11 übernimmt und sie auf die Tragkonstruktion 14 überträgt. Stahlträger 14 erlauben zudem eine Einstellung der Höhenposition der Turbine zur Optimierung des Turbinenbetriebs.

Das Flusswasser gelangt über den Beschleunigungskanal 20 in die Turbinenkammer 22, wobei sich in der Rinne 20 der Wasserspiegel vor der Mündung in die Turbinenkammer senkt, insbesondere auf eine Höhe hm bei der Mündung in die Turbinenkammer hm = 2/3 (ho + vₒ²/2g), wobei ho = Hf-Hu ist, vₒ die Wassergeschwindigeit auf der Höhe ho, und g die Gravitationskonstante ist. Die erfindungsgemässe Ausgestaltung des Kraftwerks, insbesondere die erfindungsgemässe Lage der Turbinenfussscheibe bewirkt, dass der Wasserstrom bei der Mündung in die Turbinenkammer eine Froudezahl von 1 besitzt und somit im kritischen Zustand zwischen einem schiessenden und strömenden Zustand ist. In der Kammer 22 wird das Wasser an der Turbinenkammerwand 23 umgelenkt und steigt aufgrund der Zentrifugalkraft an dieser Wand hoch. Das Turbinenrad 3 ist so positioniert, dass der Wasserspiegel im Bereich des Spaltes zwischen Turbinenlaufrad 3 und Turbinenkammerwand 23 deutlich über der Höhe der Deckscheibe 6 ist. Im Mittenbereich über der Deckscheibe 6 selbst, liegt der Wasserspiegel knapp über der Deckscheibe. Wie aus Figur 1 zu entnehmen, fliesst das Wasser entlang der inneren Turbinenkammerwand 23. Der Spalt zwischen Laufrad und Wand 23 ist so bemessen, dass genügend Wasser zu den Schaufeln gelangt und ein kontinuierlicher Fluss aufrecht erhalten ist. Dies ist insbesondere dann gegeben, wenn der Spalt zwischen Turbinenlaufschaufeln 3 und Turbinenkammerwand 23 gleich oder kleiner dem halben Turbinendurchmesser an den radial äusseren Enden der Turbinenschaufeln ist.
Ein gutes Funktionieren des Kraftwerks bedingt auch einen Saugstutzen 10, der sich vom Turbinenkammerboden bis unter den Unterwasserspiegel 27 im Auslaufkanal 28 des Kraftwerks erstreckt. Vorzugsweise ist der Stutzen 10 konisch ausgebildet, um eine gute Saugwirkung zu erzielen. Bei einer Ausmessung des Durchmessers D des Stutzens 10 an seiner engsten Stelle im Bereich von 2/3 bis zur gesamten (1/1) vertikalen Länge L des Saugstutzens 10 kann die Saugwirkung optimiert werden, wobei die vertikale Länge L des Stutzens von seiner engsten Stelle zu seinem Ende unter dem Unterwasserspiegel 27 gemessen wird.

Das Turbinenrad 3 ist deutlich über dem Unterwasserspiegel 27 angeordnet, wobei der Saugstutzen 10 unter den Unterwasserspiegel reicht. Die Position der Turbine, genauer der Turbinenfussscheibe 5, ist unter Volllastbetrieb so gewählt, dass sie auf einer Höhe von etwa 30% der gesamten Fallhöhe über dem Unterwasserspiegel 27 liegt. Dadurch sind die Voraussetzungen gegeben, um eine Wasserströmung durch die Turbine mit einer Froudezahl von um 1 zu erzielen. Ein gutes Funktionieren des Kraftwerks wird aber in allen Betriebszuständen erzielt, sofern die Unterscheibe 5 des Turbinenrads 3 sich auf einer Höhe Hu befindet, die im Bereich von 25% bis 50% der gesamten, variierenden Fallhöhe Hf bleibt.

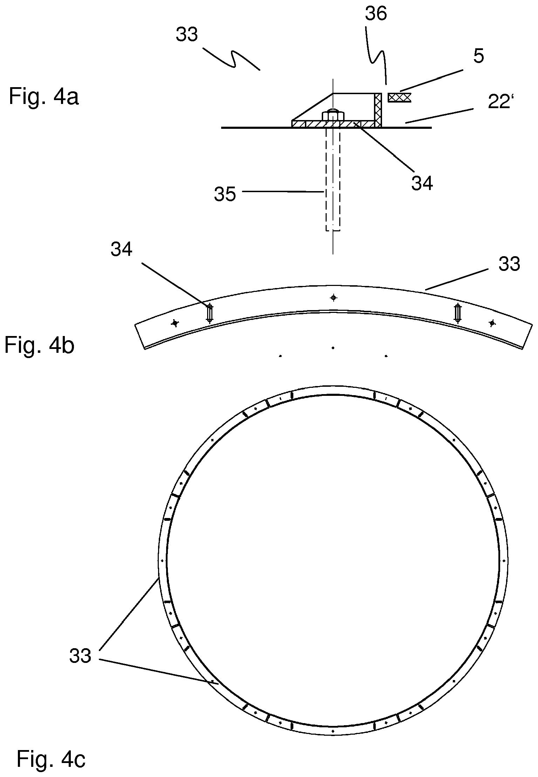

Das Turbinenrad 3 kann bezüglich des Turbinenkammerbodens 22' mittels der Stahlträger 14 genau positioniert werden, um den Spalt dazwischen möglichst zu minimieren und damit auch die Leckströmung zu begrenzen. Um die Leckströmung zu regeln, sind mehrere L-förmige verschiebbare Schienen-Elemente 33 wie in Figur 4b gezeigt am Turbinenkammerboden rund um die Turbine angeordnet (Figur 4c). Die L-förmigen Schienen-Elemente 33 sind mittels Bolzen 35 am Turbinenkammerboden befestigt (Fig. 4a), lassen sich jedoch entlang Langlöchern 34 manuell verschieben, womit sich der Spalt 36 zwischen Turbinenfussscheibe 5 und den Elementen 33 verändern lässt. Dies erlaubt eine manuelle Regelung der Leckströmung, die zwischen Turbinenfussscheibe 5 und Turbinenkammerboden 22' und in den Saugstutzen gelangen würde ohne die Turbinenschaufeln zu passieren.

### Bezugszeichenliste

- 1: Kraftwerk
- 2: Öffnung für Ein- und Ausbau
- 3: Turbinenlaufrad
- 4: Turbinenschaufeln
- 5: Turbinenfussscheibe
- 6: Turbinendeckscheibe mit Überhang
- 7: Flansch
- 8: Stahlstreben
- 9: Umlenkelement
- 10: Saugstutzen
- 11: Turbinenwelle
- 12: Lager
- 13: Lager
- 14: Träger
- 15: Generator
- 16: Oberwasserspiegel
- 17: Einlaufrinne
- 17': Rand der Einlaufrinne
- 18: Rechen
- 19: Grundablasskanal
- 20: Beschleunigungsrinne
- 21: Schütze
- 22: Turbinenkammer
- 22': Turbinenkammerboden
- 23: Turbinenkammerwand
- 24: Leitblech
- 25: Schütze
- 26:
- 27: Unterwasserspiegel
- 28: Auslaufkanal
- 29: Überfallbecken
- 30: Überfallkante
- 31: Fischschleuse
- 32: Kran
- 33: verschiebbare Schienen-Elemente
- 34: Langloch
- 35: Bolzen
- 36: Spalt

## Patentansprüche

1. Niederdruck-Kleinwasserkraftwerk (1) mit einem Einlaufkanal (17, 20), mit einem Oberwasserspiegel (16), einer Turbinenkammer (22), einer Zentripetalturbine mit vertikaler Turbinenwelle (11), einem Saugstutzen (10) und einem Auslaufkanal (28) mit einem Unterwasserspiegel (27), wobei eine Fallhöhe (Hf) zwischen dem Oberwasserspiegel (16) und Unterwasserspiegel (27) besteht,
**dadurch gekennzeichnet, dass**
der gesamte Einlaufkanal (17, 20) als Rinne ausgebildet ist und einen Beschleunigungskanal (20) aufweist, der sich in Strömungsrichtung zunehmend verjüngt und bei der engsten Stelle eine Auslassöffnung aufweist, die in die Turbinenkammer (22) mündet,
wobei die Zentripetalturbine ein Turbinenlaufrad (3) mit Turbinenlaufschaufeln (4), eine Turbinendeckscheibe (6) und eine Turbinenfussscheibe (5) aufweist, und die Turbinenfussscheibe (5) auf einer Höhe (Hu) über dem Unterwasserspiegel (27) positioniert ist, die in einem Bereich von 25% bis 50% der gesamten Fallhöhe (HF) liegt, wobei der Saugstutzen (10) unter den Unterwasserspiegel reicht und die Sogwirkung des Saugstutzens (10) zu einer staufreien Strömung im kritischen Bereich, bei maximal möglicher Durchflussmenge, von der Mündung des Einlaufkanals (17, 20) in die Turbinenkammer (22) führt, die Strömung an die Innenwand (23) der Turbinenkammer (22) drängt, und durch die Zentripetalturbine (3) führt.

2. Niederdruck-Kleinwasserkraftwerk (1) nach Anspruch 1
**dadurch gekennzeichnet, dass**
eine innere Turbinenkammerwand (23) der Turbinenkammer (22) einen runden horizontalen Querschnitt aufweist und die Zentripetalturbine (3) umschliesst,
wobei ein Spalt zwischen der inneren Turbinenkammerwand (23) und den radial äusseren Enden der Turbinenschaufeln (4) für den Einlauf des Wassers in die Turbine (3) kleiner oder maximal gleich der Hälfte des Turbinendurchmessers an den radialen Enden der Turbinenschaufeln (4) ist.

3. Niederdruck-Kleinwasserkraftwerk (1) nach einem der vorangehenden Ansprüche **dadurch gekennzeichnet, dass**
der Wasserstrom an der Mündung in die Turbinenkammer (22) ein frei fliessender Strom in maximal strömenden Zustand ist, dessen Froudezahl um 1 beträgt.

4. Niederdruck-Kleinwasserkraftwerk (1) nach einem der vorangehenden Ansprüche **dadurch gekennzeichnet, dass**
die horizontale Erstreckung der Auslassöffnung des Beschleunigungskanals (20) ein Viertel bis die Hälfte des Durchmessers der Turbine (3) an den radial äusseren Enden der Turbinenschaufeln (4) beträgt.

5. Niederdruck-Kleinwasserkraftwerk (1) nach einem der vorangehenden Ansprüche **dadurch gekennzeichnet, dass**
der Saugstutzen (10) am Boden der Turbinenkammer (22) oder an der Unterscheibe (5) der Turbine (3) angeordnet ist und sich in seiner vertikalen Länge (L) bis unter einen Unterwasserspiegel (27) im Auslaufkanal (28) erstreckt.

6. Niederdruck-Kleinwasserkraftwerk (1) nach einem der vorangehenden Ansprüche **dadurch gekennzeichnet, dass**
der Saugstutzen (10) konisch ausgebildet ist.

7. Niederdruck-Kleinwasserkraftwerk (1) nach Anspruch 6
**dadurch gekennzeichnet, dass**
der Saugstutzen (10) einen Durchmesser (D) an der Unterseite des Turbinenkammerbodens aufweist, dessen Ausmass in einem Bereich von 2/3 bis 1/1 der gesamten vertikalen Länge (L) des Saugstutzens (10) liegt, wobei die vertikale Länge (L) des Saugstutzens (10) von der Unterseite des Turbinenkammerbodens zu seinem Ende reicht.

8. Niederdruck-Kleinwasserkraftwerk (1) nach einem der vorangehenden Ansprüche **dadurch gekennzeichnet, dass**
die Turbine (3) eine Deckscheibe (6) aufweist, die im Betrieb unter dem Wasserspiegel in der Turbinenkammer (22) liegt.

9. Niederdruck-Kleinwasserkraftwerk (1) nach einem der vorangehenden Ansprüche **dadurch gekennzeichnet, dass**
die Deckscheibe (6) der Turbine (3) sich radial über das maximale radiale Ausmass der Turbinenschaufeln (4) hinaus erstreckt.

10. Niederdruck-Kleinwasserkraftwerk (1) nach einem der vorangehenden Ansprüche **dadurch gekennzeichnet, dass**
das Laufrad der Turbine (3) Turbinenschaufeln mit einer Krümmung im horizontalem Querschnitt und einen geraden vertikalen Querschnitt aufweist.

11. Niederdruck-Kleinwasserkraftwerk (1) nach einem der vorangehenden Ansprüche **dadurch gekennzeichnet, dass**
die Turbine (3) ein Durchmesser-zu-Höhen-Verhältnis in einem Bereich von 6:1 bis zu 12:1 aufweist.

12. Niederdruck-Kleinwasserkraftwerk (1) nach einem der vorangehenden Ansprüche **dadurch gekennzeichnet, dass**
das Kraftwerk Stahlstreben (8) aufweist, die mit einem Flansch (7) und der Deckscheibe (6) der Turbine (3) verbunden sind.

13. Niederdruck-Kleinwasserkraftwerk (1) nach einem der vorangehenden Ansprüche **dadurch gekennzeichnet, dass**
das Kraftwerk in der Höhe einstellbare Stahlträger (14) aufweist zur optimalen Höhenpositionierung der Turbine bezüglich des Turbinenkammerbodens 22'.

14. Niederdruck-Kleinwasserkraftwerk (1) nach einem der vorangehenden Ansprüche **dadurch gekennzeichnet, dass**
das Kraftwerk (1) einen Grundablasskanal (19) aufweist sowie eine Schütze (21) zum Öffnen und Schliessen das Kanals (19).

15. Niederdruck-Kleinwasserkraftwerk (1) nach einem der vorangehenden Ansprüche **dadurch gekennzeichnet, dass**
verschiebbare Elemente (33) auf dem Turbinenkammerboden (22') und radial auswärts der Turbine (3) zur manuellen Regelung einer Leckströmung zwischen Turbinenfussscheibe (5) und Turbinenkammerboden (22') angeordnet sind.

16. Niederdruck-Kleinwasserkraftwerk (1) nach einem der vorangehenden Ansprüche **dadurch gekennzeichnet, dass**
ein oder mehrere stationäre, gerundete Leitbleche (24) im Spalt zwischen Turbinenkammerwand (23) und Turbine (3) angeordnet sind.

17. Niederdruck-Kleinwasserkraftwerk (1) nach einem der vorangehenden Ansprüche **dadurch gekennzeichnet, dass**
unter Vollastbetrieb die Turbinenunterscheibe (5) der Turbine (3) auf einer Höhe (Hu) von etwa 30% der gesamten Fallhöhe (Hf) über dem Unterwasserspiegel (26) positioniert ist.

18. Niederdruck-Kleinwasserkraftwerk (1) nach einem der vorangehenden Ansprüche **dadurch gekennzeichnet, dass**
in der Einlaufrinne (17) ein leicht überhängend konstruierter Rechen (18) integriert ist.

## Claims

1. A low-pressure hydroelectric power station (1), comprising an inlet channel (17, 20), a headwater level (16), a turbine chamber (22), a centripetal turbine with vertical turbine shaft (11), a suction end (10) and an outlet channel (28) with a tailwater level (27), wherein there is a head of water (Hf) between the headwater level (16) and the tailwater level (27), **characterized in that** the entire inlet channel (17, 20) is formed as a trough and comprises an acceleration channel (20) which increasingly tapers in the direction of flow and comprises an outlet opening at the narrowest point which opens into the turbine chamber (22), wherein the centripetal turbine comprises a turbine wheel (3) with turbine blades (4), a turbine cover plate (6) and a turbine base plate (5), and the turbine base plate (5) is positioned at a height (Hu) above the tailwater level (27) which lies in a range of 25% to 50% of the entire head of water (Hf), wherein the suction end (10) reaches beneath the tailwater level and the suction effect of the suction end (10) leads to a congestion-free flow in the critical region, at maximum possible flow rate, from the orifice of the inlet channel (17, 20) to the turbine chamber (22), presses the flow against the inner wall (23) of the turbine chamber (22) and leads it through the centripetal turbine (3).

2. A low-pressure hydroelectric power station (1) according to claim 1, **characterized in that** an inner turbine chamber wall (23) of the turbine chamber (22) has a round horizontal cross-section and encloses the centripetal turbine (3), wherein a gap between the inner turbine chamber wall (23) and the radially outer ends of the turbine blades (4) for the inlet of the water into the turbine (3) is smaller than or at most equal to half the turbine diameter at the radial ends of the turbine blades (4).

3. A low-pressure hydroelectric power station (1) according to one of the preceding claims, **characterized in that** the water flow at the orifice into the turbine chamber (22) is a freely flowing current in maximum flowing state whose Froude number is about 1.

4. A low-pressure hydroelectric power station (1) according to one of the preceding claims, **characterized in that** the horizontal extension of the outlet opening of the acceleration channel (20) is a quarter to half of the diameter of the turbine (3) at the radially outer ends of the turbine blades (4).

5. A low-pressure hydroelectric power station (1) according to one of the preceding claims, **characterized in that** the suction end (10) is arranged at the base of the turbine chamber (22) or at the base plate (5) of the turbine (3) and extends in its vertical length (L) to below a tailwater level (27) in the outlet channel (28).

6. A low-pressure hydroelectric power station (1) according to one of the preceding claims, **characterized in that** the suction end (10) is formed in a conical way.

7. A low-pressure hydroelectric power station (1) according to claim 6, **characterized in that** the suction end (10) has a diameter (D) at the bottom side of the turbine chamber base whose dimension lies in a range of 2/3 to 1/1 of the entire vertical length (L) of the suction end (10), wherein the vertical length (L) of the suction end (10) reaches from the bottom side of the turbine chamber base to its end.

8. A low-pressure hydroelectric power station (1) according to one of the preceding claims, **characterized in that** the turbine (3) comprises a cover plate (6) which in operation lies beneath the water level in the turbine chamber (22).

9. A low-pressure hydroelectric power station (1) according to one of the preceding claims, **characterized in that** the cover plate (6) of the turbine (3) extends radially beyond the maximum radial dimension of the turbine blades (4).

10. A low-pressure hydroelectric power station (1) according to one of the preceding claims, **characterized in that** the turbine wheel of the turbine (3) comprises turbine blades with a curvature in the horizontal cross-section and a straight vertical cross-section.

11. A low-pressure hydroelectric power station (1) according to one of the preceding claims, **characterized in that** the turbine (3) has a diameter-to-height ratio in a range of 6:1 up to 12:1.

12. A low-pressure hydroelectric power station (1) according to one of the preceding claims, **characterized in that** the power station comprises steel struts (8) which are connected to a flange (7) and the cover plate (6) of the turbine (3).

13. A low-pressure hydroelectric power station (1) according to one of the preceding claims, **characterized in that** the power station comprises height-adjustable steel girders (14) for the optimal height positioning of the turbine with respect to the turbine chamber base (22').

14. A low-pressure hydroelectric power station (1) according to one of the preceding claims, **characterized in that** the power station (1) comprises a bottom outlet channel (19) as well as a sluice gate (21) for opening and closing the channel (19).

15. A low-pressure hydroelectric power station (1) according to one of the preceding claims, **characterized in that** displaceable elements (33) are arranged on the turbine chamber base (22') and radially outwardly of the turbine (3) for the manual control of a leakage flow between the turbine base plate (5) and the turbine chamber base (22').

16. A low-pressure hydroelectric power station (1) according to one of the preceding claims, **characterized in that** one or several stationary, rounded baffle plates (24) are arranged in the gap between the turbine chamber wall (23) and the turbine (3).

17. A low-pressure hydroelectric power station (1) according to one of the preceding claims, **characterized in that** under full-load operation the turbine base plate (5) of the turbine (3) is positioned at a height (Hu) of approximately 30% of the entire head of water (Hf) above the tailwater level (26).

18. A low-pressure hydroelectric power station (1) according to one of the preceding claims, **characterized in that** a rake (18) constructed in a slightly overhanging manner is integrated in the inlet channel (17).

## Revendications

1. Mini-centrale hydraulique à basse pression (1) avec un canal d'entrée (17, 20), avec un niveau d'eau d'amont (16), une chambre de turbine (22), une turbine centripète à axe de turbine vertical (11), un piquage d'aspiration (10) et un canal de sortie (28) avec un niveau d'eau d'aval (27), dans lequel une hauteur de chute (Hf) est présente entre le niveau d'eau d'amont (16) et le niveau d'eau d'aval (27), **caractérisé en ce que** le canal d'entrée (17, 20) entier est conformé comme une rigole et présente un canal d'accélération (20) qui se resserre de plus en plus dans le sens de l'écoulement et présente à son point le plus étroit une ouverture d'entrée qui débouche dans la chambre de turbine (22), la turbine centripète présentant une roue de turbine (3) avec des aubes de turbine mobiles (4), une plaque de couverture de turbine (6) et un plaque de pied de turbine (5), le plaque de pied de turbine (5) étant positionnée à une hauteur (Hu) au-dessus du niveau d'eau d'aval (27) qui est comprise entre 25 % et 50 % de la hauteur de chute totale (Hf), le piquage d'aspiration (10) s'étendant en dessous du niveau d'eau d'aval et l'effet d'aspiration du piquage d'aspiration (10) produisant un écoulement sans retenue dans la zone critique, au débit maximal possible, de l'embouchure du canal d'entrée (17, 20) à la chambre de turbine (22), qui pousse l'écoulement sur la paroi intérieure (23) de la chambre de turbine (22) et le guide à travers la turbine centripète (3).

2. Mini-centrale hydraulique à basse pression (1) selon la revendication 1, **caractérisée en ce qu'**une paroi intérieure de chambre de turbine (23) de la chambre de turbine (22) présente une section horizontale ronde et entoure la turbine centripète (3), un interstice entre la paroi intérieure de chambre de turbine (23) et les extrémités extérieures dans le sens radial des aubes de turbine (4) pour l'entrée de l'eau dans la turbine (3) étant inférieur ou au maximum égal à la moitié du diamètre de la turbine aux extrémités radiales des aubes de turbine (4).

3. Mini-centrale hydraulique à basse pression (1) selon l'une des revendications précédentes, **caractérisée en ce que** l'écoulement d'eau à l'embouchure dans la chambre de turbine (22) est un écoulement libre dans l'état de débit maximum, dont le nombre de Froude est de l'ordre de 1.

4. Mini-centrale hydraulique à basse pression (1) selon l'une des revendications précédentes, **caractérisée en ce que** l'étendue horizontale de l'ouverture de sortie du canal d'accélération (20) représente le quart à la moitié du diamètre de la turbine (3) aux extrémités extérieures dans le sens radial des aubes de turbine (4).

5. Mini-centrale hydraulique à basse pression (1) selon l'une des revendications précédentes, **caractérisée en ce que** le piquage d'aspiration (10) est disposé au fond de la chambre de turbine (22) ou sur la plaque inférieure (5) de la turbine (3) et s'étend sur sa longueur verticale (L) jusque en dessous d'un niveau d'eau d'aval (27) dans le canal de sortie (28).

6. Mini-centrale hydraulique à basse pression (1) selon l'une des revendications précédentes, **caractérisée en ce que** le piquage d'aspiration (10) est de forme conique.

7. Mini-centrale hydraulique à basse pression (1) selon la revendication 6, **caractérisée en ce que** le piquage d'aspiration (10) présente sur la face inférieure du fond de la chambre de turbine un diamètre (D) compris entre 2/3 et 1/1 de la longueur verticale totale (L) du piquage d'aspiration (10), la longueur verticale (L) du piquage d'aspiration (10) allant de la face inférieure du fond de la chambre de turbine jusqu'à son extrémité.

8. Mini-centrale hydraulique à basse pression (1) selon l'une des revendications précédentes, **caractérisée en ce que** la turbine (3) présente une plaque de couverture (6) qui se situe, en fonctionnement, en dessous du niveau d'eau dans la chambre de turbine (22).

9. Mini-centrale hydraulique à basse pression (1) selon l'une des revendications précédentes, **caractérisée en ce que** la plaque de couverture (6) de la turbine (3) s'étend dans le sens radial au-delà de la dimension radiale maximale des aubes de turbine (4).

10. Mini-centrale hydraulique à basse pression (1) selon l'une des revendications précédentes, **caractérisée en ce que** la roue de la turbine (3) présente des aubes de turbine qui ont une courbure en section horizontale et une section verticale rectiligne.

11. Mini-centrale hydraulique à basse pression (1) selon l'une des revendications précédentes, **caractérisée en ce que** le rapport entre diamètre et hauteur de la turbine (3) est compris entre 6:1 et 12:1.

12. Mini-centrale hydraulique à basse pression (1) selon l'une des revendications précédentes, **caractérisée en ce que** la centrale comprend des étais en acier (8) qui sont reliés avec une bride (7) et avec la plaque de couverture (6) de la turbine (3).

13. Mini-centrale hydraulique à basse pression (1) selon l'une des revendications précédentes, **caractérisée en ce que** la centrale présente des supports en acier (14) réglables en hauteur en vue du positionnement en hauteur optimal de la turbine par rapport au fond (22') de la chambre de turbine.

14. Mini-centrale hydraulique à basse pression (1) selon l'une des revendications précédentes, **caractérisée en ce que** la centrale (1) présente un canal de sortie par le fond (19) ainsi qu'une vanne (21) pour ouvrir et fermer le canal (19).

15. Mini-centrale hydraulique à basse pression (1) selon l'une des revendications précédentes, **caractérisée en ce que** des éléments coulissants (33) sont disposés sur le fond (22') de la chambre de turbine et vers l'extérieur de la turbine (3) dans le sens radial pour le réglage manuel d'un écoulement de fuite entre la plaque de pied de turbine (5) et le fond (22') de la chambre de turbine.

16. Mini-centrale hydraulique à basse pression (1) selon l'une des revendications précédentes, **caractérisée en ce qu'**une ou plusieurs chicanes (24) stationnaires arrondies sont disposées dans l'interstice entre la paroi de la chambre de turbine (23) et la turbine (3).

17. Mini-centrale hydraulique à basse pression (1) selon l'une des revendications précédentes, **caractérisée en ce qu'**en fonctionnement à pleine charge, la plaque inférieure (5) de la turbine (3) est positionnée à une hauteur (Hu) d'environ 30 % de la hauteur de chute totale (Hf) au-dessus du niveau d'eau d'aval (26).

18. Mini-centrale hydraulique à basse pression (1) selon l'une des revendications précédentes, **caractérisée en ce qu'**une grille de retenue (18) construite en léger surplomb est intégrée dans la rigole d'arrivée (17).
